(19) Europäisches Patentamt

European Patent Office

Office européen des brevets

(11) **EP 0 981 154 B1**

(12) **EUROPEAN PATENT SPECIFICATION**

(45) Date of publication and mention
of the grant of the patent:
**11.02.2004 Bulletin 2004/07**

(21) Application number: **99906261.5**

(22) Date of filing: **04.03.1999**

(51) Int Cl.[7]: **H01L 21/00**

(86) International application number:
**PCT/ES1999/000055**

(87) International publication number:
**WO 1999/045571 (10.09.1999 Gazette 1999/36)**

(54) **DOPING FRIT APPROPRIATE FOR THE PRODUCTION OF CONDUCTOR CERAMIC ENAMELS**

DOTIERUNGSFRITTE FÜR DIE HERSTELLUNG VON EINER LEITENDEN KERAMISCHEN EMAIL

FRITTE DOPANTE CON UE POUR LA FABRICATION D'EMAUX CERAMIQUES CONDUCTEURS

(84) Designated Contracting States:
**DE IT PT**

(30) Priority: **05.03.1998 ES 9800469**

(43) Date of publication of application:
**23.02.2000 Bulletin 2000/08**

(73) Proprietor: **COLOROBBIA ESPANA, S.A.**
**E-12192 Villafames (Castellon) (ES)**

(72) Inventors:
• **NEBOT APARICI, Antonio**
**E-12192 Villafames (ES)**

• **CARDA CASTELLO, Juan B.**
**E-12080 Castellon (ES)**

(74) Representative: **Carpintero Lopez, Francisco et al**
**HERRERO & ASOCIADOS, S.L.**
**Alcalá, 35**
**28014 Madrid (ES)**

(56) References cited:
**FR-A- 2 203 783      GB-A- 1 213 621**
**US-A- 3 658 583**

• **DATABASE HCAPLUS IN STN ACCESSION NO.**
**1989:178338 & JP 63 270 371 A (INAX CORP) 08**
**November 1988**

**Description**

**FIELD OF THE INVENTION**

This invention relates, in general, to the manufacture of anti-electrostatic ceramic products, and, in particular, it relates to a doping frit suitable for the manufacture of a vitrifiable electrically conducting enamel on a ceramic material.

**BACKGROUND OF THE INVENTION**

In certain installations special safety conditions are required to prevent deflagrations. One of these conditions refers to the minimum conductance that a floor has to have to avoid the accumulation of electric charge. The electrostatic accumulation in such installations can give rise to explosions provoked by discharge, which are capable of provoking the ignition of inflammable gases, such as in the case of operating theatres, or explosive substances, gun powders, stores of very inflammable substances, etc. Similarly, recent studies not directed directly towards safety have stated that the well being of hospital patients and health centre patients could considerably improve if the installations were to incorporate anti-electrostatic systems. They would also be suitable in computer rooms and in rooms housing equipment sensitive to static electricity.

With a view to regulating the conductance of the floors used in installations that require such safety conditions, the Ministry of Industry and Energy has the instruction MIE BT 025, relating to installations in public places, which establish that the floors which are installed in such places should have a maximum electrical resistance of 1 MegaOhm (M$\Omega$) [1 M$\Omega$ = 10$^6$ Ohms ($\Omega$)], although if there is the assurance that a value of greater than this does not favour the accumulation of dangerous electrostatic charges an electrical resistance of up to 100 M$\Omega$ can be admitted. Some guidelines from different European countries also point along these lines, specifying the same values of electrical resistance for the floors of such installations, for example, in Germany the guideline DIN-51953, and in Italy the guideline CNR-CEI no. 64-4/73.

Different solutions have been proposed for obtaining floors with a conducting covering. Some solutions are based on the manufacture of conducting floor tiles while others are related to the use of coatings with semiconductors.

With regards to the manufacture of conducting floor tiles, the Spanish patent no. P8600346 can be cited, and the European patent applications nos. EP 86117575 and EP 86101808.

With regards to the use of conducting coatings, the solutions proposed can be grouped into 4 groups depending on the materials used (conducting organic materials, conducting materials embedded in the vitrifying material, semiconducting oxides and doped semiconducting oxides). The use of conducting coatings that use semi-doped conductor oxides is mentioned for example in:

- European patent application no. EP 91200178 which describes a toning powder that contains particles composed of tin oxide doped with fluorine (in a quantity less than 10% by weight) which have a primary particle size less than 0.2 micrometers and a: specific electrical resistance of, at least, 50 $\Omega$.m;

- The European patent application no. EP 91402857 which describes an anti-static and radiotransparent paint for satellites that comprises a white semiconducting pigment, a filmogenic binding agent and a solvent for said binding agent. The white semiconducting pigment shows a electric resistance per unit volume of greater than 2.5 K$\Omega$/cm$^3$ and it is obtained by calcination between 700 and 1000° C of a mixture of 30 to 73 parts by weight of SnO$_2$, of 70 to 27 parts by weight of TiO$_2$ and of 0.10 to 10 parts by weight of Sb$_2$O$_3$, the total quantity of tin oxide and titanium oxide being 100 parts by weight;

- The European patent application no. EP92100941, which describes a receptacle for protecting electronic components from static charge that includes a electrically conducting coating that has an electric surface resistance of at least 105 Ohms per square approximately and an electrostatic dissipative coating, not carbonaceous, inorganic, that has a surface electric resistance greater than 105 Ohms per square approximately. The non-carbonaceous electrostatic dissipative material preferably contains amorphous silica particles or particles of a material that contains silica coated with tin oxide impurified with antimony.

- The European patent application no. EP 94111097 which describes some alkyl tin compounds of formula SnR1$_a$R2$_b$R3$_c$, where R1 is alkyl, R2 is acetate and R3 trifluoroacetate, a is 1 or 2, b is 1 or 2, with the condition that a + b + c = 4. With these compounds layers of tin oxide can be produced doted with fluorine with electrical conductance capacity on glass surfaces, glass ceramics and/or enamel; and

- The European patent application no EP 94113754, which describes a procedure for the manufacture of layers that reflect infrared, with electrical conductance capacity, on glass surfaces, glass ceramics or enamel that comprises producing a spray and thermal decomposition of liquid preparation that contain tin (IV) compounds and fluorine compounds as doping medium on a surface heating to a temperature of 400 to 800° C. For the liquid preparations sols of organic tin (IV) acids are used stabilised ionically, that contain, as liquid organic medium, aliphatic alcohols or ketones and fluorine ions in sufficient quantity for doping. The layers of tin oxide generated with the preparations on the substrates show a reduced surface resistance.

Additionally, it is also worth citing the following British patents:

- GB 982.600, which describes a mixture of $SnO_2$ and $Sb_2O_5$ that, calcinated at a temperature greater than 1,000° C, gives rise to a conducting ceramic product. Specifically, the mixture that contains 33% of $SnO_2$ with a molar proportion of $Sb_2O_5$ lying between 1 and 2 %, calcinated at 1,235° C shows a resistance of 1.8 MΩ/squared; and
- GB 1.112.765, which describes a composition that contains blue $SnO_2$ with 12.5 % ZnO which has semiconducting properties.

Notwithstanding, none of the solutions provided up to date is totally satisfactory, thus there remains the need to have available some ceramic materials coated with a vitrifiable anti-electrostatic enamel suitable for use in installations where it is necessary to avoid the accumulation of electrostatic charges. The present invention provides a solution to said existing need.

As is well known, the electrical conductance in ceramic materials, formed from a set of crystalline and glass phases, takes place, basically, due to two mechanisms, ionic and electronic conductivity.

The ionic conductivity implies the migration of charged ion species through the material on applying an electric field. The charge carriers are most mobile ions. This migration of ions can be classed into three types; vacant site mechanism, interstitial mechanism and displacement mechanism [Henc L.L. and West J.L., *Principles of electronic ceramics,* John Wiley & Sons, N. York (1990); Jurado, J.R., "Propiedades de materiales cerámicos avanzados; Propiedades eléctricas", *Cerámica Información*, **209,** 13-23 (1996)]. The lattice defects, in which these three mechanisms are based, are natural in crystalline networks. However, their number is limited and governed by thermodynamic considerations (it is related to the Boltzmann entropy) and thus the ionic conductivity would be low. One way of enhancing it is by means of the introduction of ions with different charges to those of the matrix, in such a way that, via the mechanisms of charge compensation, a larger number of crystal defects are induced.

Electronic conductance has electrons as the charge carrier. This type of conduction is explained by means of the theory of energy bands, according to which the electrons occupy a series of low energy levels, known as the valence band. They can be promoted to energy bands immediately above these valence bands. This upper bands are known as the conduction bands. As a result of the easy with which the jump between levels occurs the material behaves as an electrical conductor. The conductance is related to the energy difference between these two bands. Metals, excellent conducting materials, have both bands very close to one another. The opposite is the case for isolating materials in which this energetic difference is high and, as a consequence, these transitions are practically impeded, as is the case in ceramic materials. Many materials lie in the intermediate case, in which the size of the energy barrier, combined with the presence of defects introduced by doping, gives them a reasonable conductance. These are the semiconductors. If the doping is with atoms that have one electron more than the matrix this favours the movement of electrons to the conduction band. These are the type-n semiconductors. If, on the other hand, atoms with one electron less than the matrix are introduced, the concentration of positive holes increases in the valence band. These are the type-p semiconductors, and the charge carriers are positive.

The behaviour of tin (II) oxide semiconductor is widely described in the scientific literature [Loch, L.D., "Semiconducting Nature of Stannic Oxide", *J. Electrochem. Soc.* **110** (1963), 1081; Sahar, M.R. and Hasbullah M., "Properties of the $SnO_2$-based ceramics", Third Euro Ceramics Vol. 2, 455-460] was well as the doping effect of the antimony (III) oxide [Zaharescu, M., Mihiu, S., and Zuca, S., "Contribution to the study of $SnO_2$-based ceramics. Part I. High temperature interaction of tin (IV) oxide with antimony (III) oxide and copper (II) oxide". *J. Mat. Science*, **26,** (1991), 1666-1672; Zuca S., Terzi, M., Zaharescu, M. and Matiasoysky, K., "Contribution to the study of $SnO_2$-based ceramics. Part II. Effect of various oxide additive on the sintering capacity and electrical conductivity of $SnO_2$"; Paria, M.K. and Maiti, H.S., "Electrical conductivity and defect structure of polycrystalline tin dioxide doped with antimony oxide", *J. Mater. Sci* **17** (1982), 3275].

## COMPENDIUM OF THE INVENTION

This invention relates to a frit composition that contains a doping substance, preferably antimony oxide, that, mixed with a semiconducting oxide, preferably tin dioxide, allows a ceramic product to be obtained, such as a tile, an anti-electrostatic vitrifiable enamel. The frit of the invention has a composition with a doping oxide composition lying between 0.1 and 5 % by weight. The active oxides, for example, $SnO_2$, on being included in the glass phase component of the ceramic matrix of the enamel give this a resistance of less than $10^6$ $\Omega$.cm.

In the sense used in this description the term "frit" refers to a "ceramic composition that has been melted from solid state to form a granulated glass". (Frits form an important part of the charges used in the composition of enamels. The aim of this pre-fusion is to make the soluble or toxic components insoluble combining them with silica or other oxides). By analogy the term "to dope" ("dopar" in Spanish) means "to introduce impurities into the semiconductor with the aim of modifying its behaviour", as is accepted by the Real Academia de la Lengua Española (Royal Academy of Spanish Language).

In contrast to the compositions described in the state of the art, especially those that relate to enamels formed from doped semiconductor oxides, the present invention does not relate to, and therefore does not claim, the composition of the enamel, but the composition of the frit, which, mixed with the semiconductor oxides and applied to the ceramic surface, using conventional techniques, gives rise to a conducting enamel.

Although to form conducting enamel different doping oxides can be used as starting materials, for example $LiO_2$, $CuO$, $Sb_2O_3$, $Sb_2O_5$, $Bi_2O_3$, $V_2O_5$ and mixtures thereof, and different semiconducting oxides, such as the series of Cr, Fe, Nb, Sn, Ti and Zn, for example, $Cr_2O_3$, $Fe_2O_3$, $SnO_2$, $TiO_2$ and ZnO, the trials carried out have shown that the best results are obtained with the binary $Sb_2O_3$ and $SnO_2$, and that, precisely the use of antimony (III) oxide as doping element of the tin oxide, shows, also, a peculiarity which makes it recommendable for the form of a previously prepared frit with a doping element.

In effect, as will be explained further on, the antimony oxides show a certain volatility that makes it difficult to prepare an enamel with the appropriate proportion of antimony, apart from the problems of toxicity [the $LD_{50}$ in mice of $Sb_2O_3$ is greater than 20 g/kg according to Smyth and others (*J. Industrial Hyg. Toxicol.* **30,** 63, (1948)) and the $LD_{50}$ in mice of $Sb_2O_5$ is greater than 4 g/kg according to F. Bradley (*Ind. Hyg. Sect.* **2,** 15, (1941)] of the fumes be dangerous when the enamel is not prepared in installations that do not meet the necessary safety requirements for capturing fumes; it is obvious that the manufacturer will find it more useful to have a frit in which the antimony is found in a suitable and fixed proportion. But, although the above consideration is important, there is another fundamental consideration for the ceramic manufacturer, the colour obtained with the enamel. It has been seen that, when an enamel is prepared using compositions in which tin and antimony oxides are mixed beforehand, the enamel obtained does not have a white colour (more rather neutral) but rather it has a more or less grey tone, depending on the time and form in which the heating was carried out. However, if the frit is prepared containing the appropriate quantity of antimony and this is mixed with the tin oxide, the enamel obtained is white.

## DETAILED DESCRIPTION OF THE INVENTION

The invention provides a doping frit suitable for the production of ceramic conducting enamels, hereinafter, frit of the invention, formed by 45 to 65 %, by weight with respect to the total, of $SiO_2$, and 55 to 35 % by weight, of a mixture of oxides that comprises:

- at least, an oxide of a divalent element, in a proportion, by weight, lying between 3 and 35 %;

- at least, an oxide of a trivalent element, in a proportion, by weight, lying between 3 and 25 %; and

- an oxide of a doping element selected from the group formed by $Li_2O$, $CuO$, $Sb_2O_3$, $Sb_2O_5$, $Bi_2O_3$, $V_2O_3$, $V_2O_5$ and mixtures thereof, in a proportion, by weight, lying between 0.1 and 5 %.

The oxides of the divalent elements are of the formula Me(II)O, where Me(II) is a divalent element, for example, Ca, Mg, Zn, etc. The frit of the invention may contain a mixture of different types of divalent oxides in a proportion, by weight, referred to the sum of all oxides, lying between 3 and 35 %. In a particular embodiment, the frit of the invention contains a mixture of oxides of Ca, Mg, Zn, Ba and Pb(II).

The oxides of the trivalent elements are of the formula $Me(III)_2O_3$, where Me(III) is a trivalent element, for example, Al, B, etc. The frit of the invention may contain a mixture of different types of trivalent oxides in a proportion, by weight, referred to the sum of all oxides, lying between 3 and 25 %. In a particular embodiment, the frit of the invention contains a mixture of oxides of Al and B.

Additionally and optionally, the frit of the invention may contain an oxide of a monovalent element in a proportion, by weight, lying between 0 and 16 %. The oxide of the monovalent element is of the formula $Me(I)_2O$, where Me(I) is a monovalent element, for example, Na, K, Li, etc. The frit of the invention may contain a mixture of different oxides of monovalent elements in a proportion, by weight, referred to the sum of all oxides, lying between 0 and 16 %. In a particular embodiment, the frit of the invention contains a mixture of oxides of Na and K. Preferably, the doping oxide is $Sb_2O_3$.

As is well known, there are two oxides of antimony, antimony (III) oxide and antimony (V) oxide. The latter of these, according to Simon and Thaler [*Z. Anarg. Chem.*, **162,** 253 (1927)], on heating loses oxygen giving first $Sb_2O_3$. $2Sb_2O_5$ and then $Sb_2O_4$ according to an extraordinarily slow reaction. Currently it is known that this decomposition starts at temperatures slightly above 300° C and from the data of I. Barin [*Thermochemical data of Pure Substances*, VCH Verlags Gesellschaft, Weinheim, (1989)] for $Sb_2O_5$ and of I. Barin [*Thermochemical data of Pure Substances*, VCH Verlags Gesellschaft, Weinheim, (1993)] for $Sb_2O_4$ the chemical equilibrium parameters for the reaction

$$2Sb_2O_5 \rightarrow 2Sb_2O_4 + O_2$$

can be calculated, giving values that are shown in Table 1

Table 1

| T, °C | ΔH, KJ.mol$^{-1}$ | ΔS, J.mol$^{-1}$.K$^{-1}$ | ΔG, KJ.mol$^{-1}$ | $P_{o2}$ (bar) |
|---|---|---|---|---|
| 280 | 134.925 | 223.691 | 11.191 | 0.0877 |
| 290 | 135.188 | 224.161 | 8.952 | 0.1478 |
| 300 | 135.452 | 224.626 | 6.708 | 0.2447 |
| 310 | 135.719 | 225.087 | 4.459 | 0.3986 |
| 320 | 135.987 | 225.544 | 2.206 | 0.6393 |
| 330 | 136.258 | 225.996 | -0.052 | 1.010 |

$Sb_2O_3$ is a product that melts at 655° C but it shows some important allotropic changes at 606° C and 631° C. In the vapour phase it is present as a dimer, $Sb_4O_6$, and on the basis of the data of I. Barin [*Thermochemical data of Pure Substances*, VCH Verlags Gesellschaft, Weinheim, (1991)] and of Knacke [O. Knacke, O. Kubaschewski and K. Hesselman *Thermochemical Properties of Inorganic Substances*, 2$^{nd}$ edition, Springer-Verlag, Berlin (1991)] the chemical equilibrium parameters of the reaction

$$2Sb_2O_3 \rightarrow Sb_4O_6 \text{ (g)}$$

obtaining the values which are shown in Table 2

| T, °C | ΔH, KJ.mol$^{-1}$ | ΔS, J.mol$^{-1}$.K$^{-1}$ | ΔG, KJ.mol$^{-1}$ | $P_{o2}$ (bar) |
|---|---|---|---|---|
| 1100 | 35.589 | 6.633 | 26.481 | 0.0983 |
| 1150 | 31.678 | 3.835 | 26.220 | 0.1090 |
| 1200 | 27.808 | 1.163 | 26.096 | 0.1187 |
| 1250 | 23.980 | -1.393 | 26.102 | 0.1273 |
| 1300 | 20.119 | -3.841 | 26.233 | 0.1346 |
| 1350 | 16.442 | -6.187 | 26.484 | 0.1405 |
| 1400 | 12.733 | -8.438 | 26.850 | 0.1451 |
| 1450 | 9.062 | -1..60 | 27.327 | 0.1484 |

$Sb_2O_4$, which is formed on decomposition of $Sb_2O_5$ at a relatively low temperature, according to that stated above, is stable up to 1,300° C, and then decomposes in turn to antimony trioxide and oxygen according to the reaction:

$$2Sb_2O_4 \rightarrow 2Sb_2O_3 + O_2$$

Thus, there is, in principle, no reason for adding antimony as antimony (III) or antimony (V), as after heating it will formed antimony (III). Even so, given that that doping effect is produced by the antimony (III) it turns out to be useful, therefore, although not indispensable, to add it in the form of antimony (III)

In a particular embodiment of this invention, there is provided a frit that has the following composition:

| Species | % by weight with respect to the total | Value type (%) |
|---|---|---|
| $SiO_2$ | 45 - 65 | 58 |
| $Na_2O$ | 0.1 - 6 | 1 |
| $K_2O$ | 0.1 - 6 | 5 |
| CaO | 3 - 15 | 11 |
| MgO | 0.5 - 6 | 3 |
| ZnO | 0 - 15 | 11 |
| $Al_2O_3$ | 3 - 12 | 3 |
| $B_2O_3$ | 0.5 - 12 | 3 |
| $Sb_2O_3$ | 0.1 - 5 | 3 |

The doping oxide, $Sb_2O_3$, present in the composition of the frit in indicated quantity (between 0.1 % and 5 % by weight) allows, according to that stated earlier, the conducting properties to be conferred on the glazing obtained from mixing with a semiconductor.

Although the best results have been obtained by the addition of $Sb_2O_3$ to the composition type indicated above, this compound can be substituted for another doping oxide selected from those indicated earlier.

The frit of the invention can be obtained by mixing, using conventional means, the raw materials that provide the oxide components, and then melting the mixture obtained at a temperature lying between 1,100 and 1,550° C, preferably at 1,500° C. After solidifying the molten product this is ready to be sold.

The frit of the invention is suitable for preparing a conducting enamel on a ceramic material. The frit is of particular application to the production of enamelled or sinterised ceramic pieces, for example, floor tiles. A specific application of the frit of the invention is the production of floor tiles, or any other ceramic product, by means of vitrification after mixing the frit of the invention with a semiconductor oxide, such as those from the series Fe, Cr, Ti, Nb and/or Zn, preferably $SnO_2$.

In order to attain-the conducting enamel, the solidified frit of the invention is mixed with a semiconducting oxide, for example, tin oxide or a material which preferably contains it in a proportion greater than 85 %, provided that the impurities that form the remaining 15 % can be considered as not detracting from the ceramic (silica, silicates, etc). The mixture (raw enamel), that contains a percentage of semiconductor oxide lying between 5 and 50% by weight, preferably 30 %, which supposes a ratio frit:semiconductor oxide lying between 19 and 1, preferably 3, is distributed on the ceramic support according to conventional methods in such a way that on receiving the pavement there might be electrical contact between the floor tiles, setting material and discharge point. The next step is heating to a temperature lying between 1,000 and 1,250° C following a conventional thermal cycle.

The following examples serve to illustrate specific ways of realising the present invention without them being considered as limiting the scope thereof.

**EXAMPLE 1**

**Preparation of a doping frit**

A doping frit, suitable for the manufacture of conducting ceramic enamels, which had the following percentage composition:

| Oxide | % by weight with respect to the total |
|---|---|
| $SiO_2$ | 56.24 |
| CaO | 10.44 |
| ZnO | 10.44 |
| $Al_2O_3$ | 5.20 |
| $B_2O_3$ | 5.20 |
| $K_2O$ | 5.20 |

(continued)

| Oxide | % by weight with respect to the total |
|---|---|
| MgO | 3.12 |
| $Na_2O$ | 1.04 |
| $Sb_2O_3$ | 3.21 |

In order to obtain said doping frit the raw materials that are indicated below were used.

| Raw material | % | type |
|---|---|---|
| Quartz | 30.85 | Sibelco SE-6 |
| Potassium nitrate | 2.25 | |
| Calcium carbonate | 9.41 | |
| Zinc oxide | 7.16 | |
| Boric acid | 5.38 | |
| Dolomite | 10.24 | |
| Potassium felspar | 31.72 | Incusa F-100 |
| Antimony oxide | 2.99 | |

The raw materials were mixed in the indicated quantities and the resulting composition was melted at 1,480° C until, with the reaction over, the mass was molten and uniform (without solid parts). The molten frit was solidified pouring it onto water. This frit could provide a vitrifiable enamael with a resistance of $0.8 \times 10^{-6}$ Ω.

**EXAMPLE 2**

Preparation of an enamel

A vitrifiable anti-electrostatic enamel can be prepared from the doping frit of Example 1 mixing said frit, once drained and dry, with tin oxide in the following ratio:

| Frit | 67 % (by weight) |
|---|---|
| Tin oxide | 33 % (by weight) |

In any particular embodiment, the doping frit of Example 1 can be mixed with tin oxide and with a load of additives for the enamel to obtained the following composition:

| Doping frit of Example 1 | 167.5 g |
|---|---|
| Tin oxide | 82.5 g |

Additives load for the enamel:

| D'Arvor Kaolin | 19.0 g |
|---|---|
| Water | 87.5 g |
| Carboxymethylcellulose (CMC) | 0.5 g |
| Sodium Hexamethaphosphate (HMF) | 0.25 g |

The resulting composition is submitted to grinding in a fast laboratory mill until a reject of 45 microns of less than 3 % is obtained.

Next, 25 g of said ground composition (raw enamel) was applied to a pistol over a piece of vitrified ceramic, of 33 x 33 cm, with standard engobe, and, then fired in an industrial roller-hearth oven at 1,140° C with a 40 minute cycle.

The baked enamel is white with a satin-like surface. The electrical resistance of the enamel measured between two points on the surface is $0.8 \times 10^{-6}$ Ω.

The additives load for the enamel, if so desired, can also contain a ceramic pigment, thus allowing the coloration of the resulting enamel to be varied at will.

**Claims**

1. A doping frit suitable for the manufacture of conducting ceramic enamels, **characterised** because it is composed of 45 to 65 %, by weight, with respect to the total, of $SiO_2$, and 55 to 35 % by weight, of a mixture of oxides that comprise:

   - at least, an oxide of a divalent element, in a proportion, by weight, lying between 3 and 35 %;

   - at least, an oxide of a trivalent element, in a proportion, by weight, lying between 3 and 25 %; and

   - an oxide of a doping element selected from the group formed by $Li_2O$, $CuO$, $Sb_2O_3$, $Sb_2O_5$, $Bi_2O_3$, $V_2O_3$, $V_2O_5$ and mixtures thereof, in a proportion, by weight, lying between 0.1 and 5 %.

2. A frit according to claim 1, in which said mixture of oxides contains different oxides of divalent elements in a proportion, by weight, referred to the total sum of oxide content, lying between 3 and 35 %.

3. A frit according to claim 2, in which said mixture of oxides of divalent elements is composed of a mixture of oxides of Ca, Mg, Zn, Ba and Pb(II).

4. A frit according to claim 1, in which said mixture of oxides contains a mixture of different oxides of trivalent elements in a proportion, by weight, referred to the total sum of oxide content, lying between 3 and 25 %.

5. A frit according to claim 4, in which said mixture of oxides of divalent elements is composed of a mixture of oxides of Al and B.

6. A frit according to claim 1, in which said mixture of oxides comprises, furthermore, at least, an oxide of a monovalent element in a proportion, by weight, of up to 16 %.

7. A frit according to claim 6, in which said mixture of oxides contains a mixture of different oxides of monovalent elements in a proportion, by weight, referred to the sum of all oxides, of up to 16 %.

8. A frit according to claim 7, in which said mixture of oxides of-monovalent elements is composed of a mixture of oxides of Na and K.

9. A frit according to any of the previous claims, in which said doping oxide is $Sb_2O_3$.

10. A frit according to claim 6, that has the following composition

| Species | % by weight with respect to the total |
|---|---|
| $SiO_2$ | 45 - 65 |
| $Na_2O$ | 0.1 - 6 |
| $K_2O$ | 0.1 - 6 |
| CaO | 3 - 15 |
| MgO | 0.5 - 6 |
| ZnO | 0 - 15 |
| $Al_2O_3$ | 3 - 12 |
| $B_2O_3$ | 0.5 - 12 |
| $Sb_2O_3$ | 0.1 - 5 |

11. A frit according to claim 10, that has the following composition:

| Species | Value type (%) |
|---|---|
| $SiO_2$ | 58 |
| $Na_2O$ | 1 |
| $K_2O$ | 5 |
| CaO | 11 |
| MgO | 3 |
| ZnO | 11 |
| $Al_2O_3$ | 3 |
| $B_2O_3$ | 3 |
| $Sb_2O_3$ | 3 |

12. A procedure for the manufacture of a doping frit according to any of claims 1 to 11, which comprises mixing the raw materials that provide the component oxides, melting the mixture obtained at a temperature lying between 1,100 and 1,550° C and allowing the molten product to solidify.

13. A procedure for obtaining a vitrifiable anti-electrostatic enamel on a ceramic product that comprises mixing the solidified frit obtainable according to the procedure of claim 12 with a semiconducting oxide, in a quantity lying between 50 and 95 % by weight of the frit and 50 and 5 % by weight of the semiconducting oxide and distributing said raw enamel over a ceramic support and heating to a temperature lying between 1,000 and 1,250° C to vitrify it.

14. A procedure according to claim 13, in which said semiconducting oxide is selected from the group formed by the semiconducting oxides of the series of oxides of Cr, Fe, Sn, Ti, Nb and Zn.

15. A procedure according to claim 14, in which said semiconducting oxide is $SnO_2$.

16. A procedure according to claim 13, in which said vitrifiable enamel obtained has a resistance less than $10^6$ Ω.cm.

17. A ceramic product coated with a vitrifiable anti-electrostatic enamel obtainable according to the procedure of claim 13.

**Patentansprüche**

1. Eine Schmierfritte, die zur Herstellung von leitenden Keramiklacken geeignet ist, **dadurch gekennzeichnet, dass** sie aus 45 bis 65% Massenanteil hinsichtlich der Gesamtmassen aus $SiO_2$ und 55 bis 35% Massenanteil aus einer Oxidmischung besteht, die Folgendes umfasst:

   - mindestens ein Oxid eines zweiwertigen Elements in einem Gewichtsverhältnis, das zwischen 3 und 35% liegt.

   - mindestens ein Oxid eines dreiwertigen Elements in einem Gewichtsverhältnis, das zwischen 3 und 25% liegt.

   - ein Oxid eines Schmierelements, ausgewählt aus der Gruppe gebildet aus $Li_2O$, CuO, $Sb_2O_3$, $Sb_2O_5$, $Bi_2O_3$, $V_2O_3$, $V_2O_5$ und Mischungen hiervon zu einem Gewichtsverhältnis, das zwischen 0,1 und 5% liegt.

2. Eine Schmierfritte gemäss Anspruch 1, bei der besagte Mischung aus Oxiden von zweiwertigen Elementen in einem Gewichtsverhältnis bezogen auf die Gesamtsumme von Oxidanteil zwischen 3 und 35% liegt.

3. Eine Schmierfritte gemäss Anspruch 2, bei der die besagte Mischung von Oxiden von zweiwertigen Elementen aus einer Mischung von Oxiden von Ca, Mg, Zn, Ba und Pb(II) besteht.

4. Eine Schmierfritte gemäss Anspruch 1, bei der besagte Mischung aus Oxiden von dreiwertigen Elementen in einem Gewichtsverhältnis bezogen auf die Gesamtsumme von Oxidanteil zwischen 3 und 25% liegt.

EP 0 981 154 B1

**5.** Eine Schmierfritte gerriäss Anspruch 4, bei der die besagte Mischung von Oxiden von zweiwertigen Elementen aus einer Mischung von Oxiden von Al und B besteht.

**6.** Eine Schmierfritte gemäss Anspruch 1, bei der die Mischung aus besagten Oxiden ausserdem mindestens ein Oxid eines einwertigen Elements in einem Gewichtsverhältnis bis zu 16% umfasst.

**7.** Eine Schmierfritte gemäss Anspruch 6, bei der besagte Mischung aus Oxiden von einwertigen Elementen in einem Gewichtsverhältnis bezogen auf die Gesamtsumme von Oxidanteil bis 16% liegt.

**8.** Eine Schmierfritte gemäss Anspruch 7, bei der die besagte Mischung von Oxiden von zweiwertigen Elementen aus einer Mischung von Oxiden von Na und K besteht.

**9.** Eine Schmierfritte gemäss einem der vorangegangenen Ansprüche, bei der besagtes Schmieroxid $Sb_2O_3$ ist.

**10.** Eine Schmierfritte gemäss Anspruch 6 mit der folgenden Zusammensetzung

| Art | % Gewichtanteil bezogen auf die Gesamtsumme |
|---|---|
| $SiO_2$ | 45-65 |
| $Na_2O$ | 0,1-6 |
| $K_2O$ | 0,1-6 |
| CaO | 3-15 |
| MgO | 0,5-6 |
| ZnO | 0-15 |
| $Al_2O_3$ | 3-12 |
| $B_2O_3$ | 0,5-12 |
| $Sb_2O_3$ | 0,1-5 |

**11.** Eine Schmierfritte gemäss Anspruch 10 mit der folgenden Zusammensetzung

| Art | % Gewichtanteil bezogen auf die Gesamtsumme |
|---|---|
| $SiO_2$ | 58 |
| $Na_2O$ | 1 |
| $K_2O$ | 5 |
| CaO | 11 |
| MgO | 3 |
| ZnO | 11 |
| $Al_2O_3$ | 3 |
| $B_2O_3$ | 3 |
| $Sb_2O_3$ | 3 |

**12.** Ein Verfahren zur Herstellung einer Schmierfritte gemäss einem der Ansprüche 1 bis 11, das das Mischen der Rohmaterialien umfasst, die die Oxidkomponenten liefern, wobei die erhaltene Mischung geschmolzen wird bei einer Temperatur, die zwischen 1.100 und 1.550 °C liegt und das Produkt dann erstarren gelassen wird.

**13.** Ein Verfahren, um einen sinterbaren antielektrostatischen Lack auf einem Keramikprodukt zu erhalten, das das Mischen der erstarrten Fritte umfasst, die gemäss dem Verfahren des Anspruchs 12 erhalten wurde, mit einem Halbleiteroxid in einer Menge zwischen 50 und 95% Gewichtanteil von Fritte und zwischen 50 und 5% Gewichtanteil des Halbleiteroxids und das Verteilen des genannten Rohlachs auf einer Keramikunterlage und das Erhitzen auf eine Temperatur, die zwischen 1.000 und 1.250 °C liegt, um ihn erstarren zu lassen.

**14.** Ein Verfahren gemäss Anspruch 13, bei dem das besagte Halbleiteroxid ausgewählt wird aus der Gruppe, die aus Halbleiteroxiden der Serie Oxide von Cr, Fe, Sn, Ti, Nb und Zn besteht.

**15.** Ein Verfahren gemäss Anspruch 14, bei dem das besagte Halbleiteroxid $SnO_2$ ist.

**16.** Ein Verfahren gemäss Anspruch 13, bei dem der besagte sinterbare Lack einen Widerstand hat, der geringer ist als $10^6$ Ω cm.

**17.** Ein Keramikprodukt überzogen mit einem sinterbaren antielektrostatischen Lack, der gemäss dem Verfahren des Anspruchs 13 erhaltbar ist.

**Revendications**

**1.** Fritte dopante pour la fabrication d'émaux céramiques conducteurs, **caractérisée en ce qu'**elle est composée entre 45 et 65% en poids, par rapport au poids total, de $SiO_2$, et entre 55 et 35% en poids, d'un mélange d'oxydes qui comprend :

- au moins, un oxyde d'un élément divalent, dans une proportion, en poids, allant de 3 à 35%,
- au moins, un oxyde d'un élément trivalent, dans une proportion, en poids, allant de 3 à 25% ; et
- un oxyde d'un élément dopant sélectionné parmi le groupe constitué par $Li_2O$. CuO, $Sb_2O_3$, $Sb_2O_5$, $Bi_2O_3$, $V_2O_3$, $V_2O_5$ et leurs mélanges, dans une proportion, en poids, allant de 0,1 à 5%.

**2.** Une fritte selon la revendication 1, dans laquelle ledit mélange d'oxydes contient différents oxydes d'éléments divalents dans une proportion, en poids, relative à la somme totale du contenu d'oxydes, allant de 3 à 35%.

**3.** Une fritte selon la revendication 2, dans laquelle ledit mélange d'oxydes d'éléments divalents est constitué d'un ménage d'oxydes de Ca, Mg, Zn, Ba et Pb(II).

**4.** Une fritte selon la revendication 1, dans laquelle ledit mélange d'oxydes contient un mélange de différents oxydes d'éléments trivalents dans une proportion, en poids, relative à la somme totale du contenu d'oxydes, allant de 3 à 25%.

**5.** Une fritte selon la revendication 4, dans laquelle ledit mélange d'oxydes d'éléments divalents est constitué d'un ménage d'oxydes de Al et B.

**6.** Une fritte selon la revendication 1, dans laquelle ledit mélange d'oxydes comprend, en outre, au moins, un oxyde d'un élément monovalent dans une proportion, en poids, de jusqu'à 16%.

**7.** Une fritte selon la revendication 6, dans laquelle ledit mélange d'oxydes contient un mélange de différents oxydes d'éléments monovalents dans une proportion, en poids, relative à la somme de tous les oxydes, de jusqu'à 16%.

**8.** Une fritte selon la revendication 7, dans laquelle ledit mélange d'oxydes d'éléments monovalents est constitué par un mélange d'oxydes de Na et K.

**9.** Une fritte selon l'une quelconque des revendications précédentes, dans laquelle ledit oxyde dopant est $Sb_2O_3$.

**10.** Une fritte selon la revendication 6, qui a la composition suivante

| Espèce | % en poids par rapport au total |
|---|---|
| $SiO_2$ | 45 - 65 |
| $Na_2O$ | 0,1 - 6 |
| $K_2O$ | 0,1 - 6 |

(suite)

| Espèce | % en poids par rapport au total |
|---|---|
| CaO | 3 - 15 |
| MgO | 0,5 - 6 |
| ZnO | 0 - 15 |
| $Al_2O_3$ | 3 - 12 |
| $B_2O_3$ | 0,5 - 12 |
| $Sb_2O_3$ | 0,1 - 5 |

**11.** Une fritte selon la revendication 10, qui a la composition suivante

| Espèce | Type de valeur (%) |
|---|---|
| $SiO_2$ | 58 |
| $Na_2O$ | 1 |
| $K_2O$ | 5 |
| CaO | 11 |
| MgO | 3 |
| ZnO | 11 |
| $Al_2O_3$ | 3 |
| $B_2O_3$ | 3 |
| $Sb_2O_3$ | 3 |

**12.** Un procédé pour la fabrication d'une fritte dopante selon l'une quelconque des revendications 1 à 11, qui consiste à mélanger les matières premières qui fournissent les oxydes des composants, fondre le mélange. obtenu à une température allant de 1100 à 1500°C et laisser que le produit fondu se solidifie.

**13.** Un procédé pour obtenir un émail vitrifiable anti-électrostatique sur un produit céramique qui consiste à mélanger la fritte solidifiée pouvant être obtenue selon le procédé de la revendication 12 avec un oxyde semi-conducteur, dans une quantité allant de 50 à 95%, en poids de la fritte et de 50 à 5% en poids de l'oxyde semi-conducteur et distribuer ledit émail brut sur un support céramique et réchauffer à une température allant de 1000 à 1250°C pour le vitrifier.

**14.** Un procédé selon la revendication 13, dans lequel ledit oxyde semi-conducteur est sélectionné parmi le groupe constitué par les oxydes semiconducteurs de la série d'oxydes de Cr, Fe, Sn, Ti, Nb et Zn.

**15.** Un procédé selon la revendication 14, dans lequel ledit oxyde semi-conducteur est $SnO_2$.

**16.** Un procédé selon la revendication 13, dans lequel ledit émail vitrifiable. obtenu a une résistance inférieure à $10^6$ $\Omega$.cm

**17.** Un produit céramique revêtu d'un émail vitrifiable anti-électrostatique pouvant être obtenu selon le procédé de la revendication 13.